# EUROPEAN PATENT APPLICATION

(11) **EP 4 546 615 A1**
(43) Date of publication of application: **30.04.2025**
(21) Application number: 24175554.5
(22) Date of filing: 13.05.2024
(51) Int. Cl.: H02K 1/32, H02K 7/00, H02K 15/14

(54) **MOTOR ROTATING SHAFT, ASSEMBLY METHOD OF MOTOR ROTATING SHAFT, MOTOR, AND VEHICLE**

(30) Priority: 27.10.2023 CN 202311415541
(71) Applicant: Xiaomi EV Technology Co., Ltd., Beijing 100176 (CN)
(72) Inventor: YANG, Yalin, Beijing 100176 (CN)
(74) Representative: Dehns Germany Partnerschaft mbB

(57) **Abstract**

The disclosure relates to a motor rotating shaft, an assembly method of a motor rotating shaft, a motor and a vehicle. The motor rotating shaft (100) includes a rotating shaft body (1) and an oil pipe (2), the rotating shaft body (1) is provided with a cavity (12), a first hole (13) and a second hole (14), and the first hole (13) and the second hole (14) both communicate with the cavity (12). The oil pipe (2) is arranged inside the rotating shaft body (1), and the oil pipe (2) and the rotating shaft body (1) are both provided with through holes (10) for leading cooling liquid in the oil pipe (2) out of the rotating shaft body (). In a process of inserting the oil pipe (2) into the rotating shaft body (1) from either of the first hole (13) and the second hole (14), the oil pipe (2) is configured to form an interference fit with the one used as a non-inserting hole in the first hole (13) and the second hole (14) first, and then to form an interference fit with the other one used as an inserting hole in the first hole (13) and the second hole (14).

## Description

### TECHNICAL FIELD

The disclosure relates to the technical field of motor cooling, in particular to a motor rotating shaft, an assembly method of a motor rotating shaft, a motor and a vehicle.

### BACKGROUND OF THE INVENTION

With the increase of a motor power density and a torque density, current motors are more and more cooled by a liquid cooling technology to obtain a better cooling effect. Cooling of the motor is mainly cooling of a motor rotor, the motor rotor is mainly cooled by cooling liquid sprayed by a motor rotating shaft in a rotating process. For example, the motor rotating shaft is internally provided with a flow path generally for the cooling liquid to pass through.

### SUMMARY OF THE INVENTION

The disclosure aims to provide a motor rotating shaft, an assembly method of a motor rotating shaft, a motor, and a vehicle, so as to solve the above technical problem.

In order to achieve the above objective, as a first aspect provides a motor rotating shaft, includes:
a rotating shaft body, having a cavity, a first hole and a second hole, the first hole and the second hole are both in communication with the cavity; and
an oil pipe, arranged in the rotating shaft body, the oil pipe and the rotating shaft body both having through holes for leading cooling liquid in the oil pipe out of the rotating shaft body; where,
in a process of inserting the oil pipe into the rotating shaft body from either of the first hole and the second hole, the oil pipe is configured to form an interference fit with the one used as a non-inserting hole in the first hole and the second hole first, and then to form an interference fit with the other one used as an inserting hole in the first hole and the second hole.

In some examples, the oil pipe has a first fitting surface and a second fitting surface;
the first fitting surface is used for being in an interference fit with the first hole, and the second fitting surface is used for being in an interference fit with the second hole;
the first hole is used as the inserting hole, an outer diameter of the second fitting surface is smaller than an outer diameter of the first fitting surface; or
the second hole is used as the inserting hole, the outer diameter of the second fitting surface is larger than the outer diameter of the first fitting surface.

In some examples, the oil pipe has a first oil pipe segment and a second oil pipe segment with unequal diameters in an axial direction,
the first fitting surface is a circumferential outer surface of the first oil pipe segment, and the second fitting surface is a circumferential outer surface of the second oil pipe segment.

In some examples, the first hole is used as the inserting hole, a length of a contact surface between the second fitting surface and the second hole extending in the axial direction is larger than a length of a contact surface between the first fitting surface and the first hole extending in the axial direction; or
the second hole is used as the inserting hole, the length of the contact surface between the second fitting surface and the second hole extending in the axial direction is smaller than the length of the contact surface between the first fitting surface and the first hole extending in the axial direction.

In some examples, the rotating shaft body is of an integrated structure.

In some examples, the rotating shaft body includes a main body portion and a shaft head portion, the second hole is formed in the shaft head portion, and the shaft head portion is detachably connected with the main body portion.

In some examples, the through holes include a first through hole and a second through hole;
the first through hole is formed in a wall of the rotating shaft body for enabling the cavity to communicate with an outside of the rotating shaft body; and
the second through hole is formed in a wall of the oil pipe for enabling an interior of the oil pipe to communicate with the cavity.

In some examples, the plurality of first through holes are provided and include a first sub-through hole and a second sub-through hole; and
the rotating shaft body is provided with a mounting portion for mounting a rotor core, and the first sub-through hole and the second sub-through hole are formed in the mounting portion at intervals in an axial direction of the rotating shaft body.

In the axial direction of the rotating shaft body, the second through hole is located between the first sub-through hole and the second sub-through hole.

In some examples, in the axial direction of the rotating shaft body, a distance between the second through hole and the first sub-through hole is a first distance, a distance between the second through hole and the second sub-through hole is a second distance, and the first distance is equal to the second distance

In some examples, the plurality of second through holes are provided, the plurality of second through holes are arranged at intervals in a circumferential direction of the oil pipe, and in an axial direction of the oil pipe, the plurality of second through holes are the same in position.

In some examples, the plurality of first sub-through holes are provided, the plurality of first sub-through holes are arranged at intervals in a circumferential direction of the rotating shaft body, and in the axial direction of the rotating shaft body, the plurality of first sub-through holes are the same in position; and/or
the plurality of second sub-through holes are provided, the plurality of second sub-through holes are arranged at intervals in a circumferential direction of the rotating shaft body, and in the axial direction of the rotating shaft body, the plurality of second sub-through holes are the same in position.

In some examples, the motor rotating shaft further includes a plug, the plug is mounted at a part of an interior of the second hole away from the cavity, or, the plug is mounted at a part of the first hole away from the cavity.

In some examples, a threaded hole is formed on a side of the plug away from the cavity.

In some examples, a mounting surface for mounting a rotor core is formed on an outer surface of the rotating shaft body;
a cut-through keyway is formed on the mounting surface in the axial direction of the rotating shaft body; and
a V-shaped opening is formed at one end of the keyway, and an opening direction of the V-shaped opening faces a side away from the keyway.

A second aspect provides an assembly method of a motor rotating shaft. The method is applied to the above motor rotating shaft and includes:
providing a rotating shaft body;
providing an oil pipe; and
obtaining the motor rotating shaft by inserting and mounting the oil pipe into the rotating shaft body, where, through hole of the oil pipe and through hole in the rotating shaft body all communicate with a cavity.

In some examples, the motor rotating shaft further includes a plug. The method further includes:
inserting the plug into a first hole or a second hole in a direction close to the cavity.

A third aspect provides a motor, including the above motor rotating shaft

A fourth aspect provides a vehicle, including the above motor.

Through the above technical solution, the oil pipe is configured to form the interference fit with the one used as the non-inserting hole in the first hole and the second hole first, and then to form the interference fit with the one used as the inserting hole in the first hole and the second hole, the resistance of the oil pipe needing to overcome in a process of being fixed into the rotating shaft body by the interference fit may be reduced, thus reducing the assembly difficulty of assembling the motor rotating shaft. In addition, two ends of the oil pipe are in an interference fit with the first hole and the second hole respectively, which also increases the connection strength of the oil pipe and the rotating shaft body, prevents the oil pipe from falling off from an interior of the rotating shaft body due to rotating or vibrating, so that the motor rotating shaft is not prone to separating in a running process, and normal running of the motor rotating shaft is ensured.

Other features and merits will be described in detail in subsequent specific implementation parts.

### BRIEF DESCRIPTION OF DRAWINGS

Accompanying drawings are provided for further understanding the disclosure, and constitute a part of the specification, for explaining the disclosure with the following specific implementations, but not constitute limitations to the invention. In figures:
Fig. 1 is a schematic three-dimensional diagram of a motor rotating shaft provided by an example of the invention.
Fig. 2 is a schematic front view of a motor rotating shaft provided by an example of the invention.
Fig. 3 is a schematic sectional view of Fig. 2 in a direction A-A, where, a rotating shaft body is of an integrated structure.
Fig. 4 is a schematic front view of an oil pipe provided by an example of the disclosure, showing a first fitting surface and a second fitting surface of the oil pipe.
Fig. 5 is a schematic sectional view of a motor rotating shaft in an axial direction provided by another example of the invention, where, the rotating shaft body is of a split structure.
Fig. 6 is a schematic diagram of steps of an assembly method of a motor rotating shaft provided by an example of the invention.
Figure 7 is a schematic diagram of a motor provided by an example of the invention, wherein a motor rotating shaft and a rotor core of the motor are shown.
Figure 8 is a schematic diagram of a vehicle provided by an example of the invention.

### DETAILED DESCRIPTION OF THE INVENTION

The specific implementations of the invention are described in detail below in conjunction with accompanying drawings. It is to be understood that the described specific implementations are merely used to explain and illustrate the invention, and not to limit the invention, the scope of which is defined by the claims.

In the disclosure, in a case of not oppositely explaining, used position words such as "up and down" are usually defined with reference to the drawing direction of the corresponding accompanying drawings. "Inner and outer" refer to an interior and an exterior of an outline of a corresponding component. In addition, the terms "first", "second" and the like are used to distinguish descriptions, and are not understood to indicate or imply relative importance.

In the related art, a way of arranging a cooling liquid pipe in a penetrating mode in the motor rotating shaft is generally used for arranging a flow path. Although the cooling liquid pipe can achieve cooling, the assembly difficulty of the cooling liquid pipe is large.

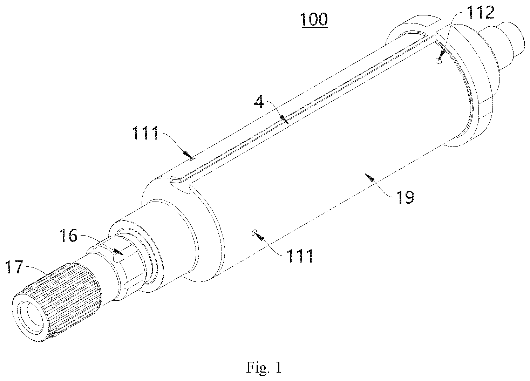

As a first embodiment of the invention, as shown in Fig. 1 to Fig. 5, there is provided a motor rotating shaft 100, including a rotating shaft body 1 and an oil pipe 2, the rotating shaft body 1 is provided with a cavity 12, a first hole 13 and a second hole 14, and the first hole 13 and the second hole 14 both communicate with the cavity 12. The oil pipe 2 is arranged inside the rotating shaft body 1, the oil pipe 2 and the rotating shaft body 1 are both provided with through holes 10 for leading cooling liquid in the oil pipe 2 out of the rotating shaft body 1, that is, the cooling liquid is led out of the rotating shaft body 1.

In a process of inserting the oil pipe 2 into the rotating shaft body 1 from either of the first hole 13 and the second hole 14, the oil pipe 2 is configured to form an interference fit with the one used as a non-inserting hole in the first hole 13 and the second hole 14 first, and then to form an interference fit with the other one used as an inserting hole in the first hole 13 and the second hole 14.

In a running process of the motor rotating shaft 100, the cooling liquid may enter the oil pipe 2 from one end of the oil pipe 2, and pass through the through holes 10 located in the rotating shaft body 1 and the oil pipe 2 in sequence to reach an exterior of the rotating shaft body 1, so as to cool a rotor located on an outer side of the rotating shaft body 1.

Since the resistance of the interference fit needing to overcome is large, through the above technical solution, the oil pipe 2 is configured to form the interference fit with the one used as the non-inserting hole in the first hole 13 and the second hole 14 first, and then to form the interference fit with the one used as the inserting hole in the first hole 13 and the second hole 14, the resistance of the oil pipe 2 needing to overcome in a process of being fixed into the rotating shaft body 1 by the interference fit may be reduced, thus reducing the assembly difficulty of the motor rotating shaft 100, and improving the assembling efficiency.

In addition, two ends of the oil pipe 2 are in an interference fit with the first hole 13 and the second hole 14 respectively, which also increases the connection strength of the oil pipe 2 and the rotating shaft body 1, prevents the oil pipe 2 from falling off from an interior of the rotating shaft body 1 due to rotating or vibrating, so that the motor rotating shaft 100 is not prone to separating in the running process, and normal running of the motor rotating shaft 100 is ensured.

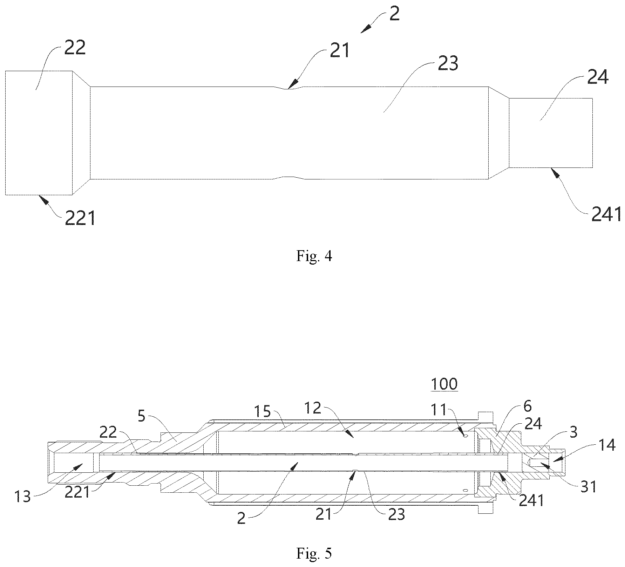

In some examples, as shown in Fig. 4, the oil pipe 2 has a first fitting surface 221 and a second fitting surface 241, the first fitting surface 221 is used for being in an interference fit with the first hole 13, and the second fitting surface 241 is used for being in an interference fit with the second hole 14.

In an example of the first hole 13 being used as an inserting hole, an outer diameter of the second fitting surface 241 is smaller than an outer diameter of the first fitting surface 221.

In an example of the second hole 14 being used as the inserting hole, the outer diameter of the second fitting surface 241 is larger than the outer diameter of the first fitting surface 221.

In two examples of the first hole 13 and the second hole 14 being used as the inserting hole respectively, an outer diameter of the first fitting surface 221 or the second fitting surface 241 fitting with the one serving as the inserting hole is larger than an outer diameter fitting with the other serving as the non-inserting hole, so that it is ensured that in a process of the oil pipe 2 being inserted into the rotating shaft body 1, the first fitting surface 221 and the second fitting surface 241 may fit with the first hole 13 and the second hole 14 in sequence respectively according to a certain order, and thus the assembling difficulty of the oil pipe 2 is reduced.

In some examples, as shown in Fig. 4, the oil pipe 2 has a first oil pipe segment 22 and a second oil pipe segment 24 with unequal diameters in an axial direction, the first fitting surface 221 is a circumferential outer surface of the first oil pipe segment 22, and the second fitting surface 241 is a circumferential outer surface of the second oil pipe segment 24. As such design, the first fitting surface 221 and the second fitting surface 241 may have different outer diameters.

Referring to Fig. 4, at least one reducing pipe segment may be formed between the first oil pipe segment 22 and the second oil pipe segment 24 on the oil pipe 2, so that the first oil pipe segment 22 and the second oil pipe segment 24 with different diameters may be connected. In some examples, as shown in Fig. 4, two reducing pipe segments may be arranged on the oil pipe 2, that is, a third oil pipe segment 23 may be formed between the first oil pipe segment 22 and the second oil pipe segment 24, where, one end with a larger diameter of the first reducing pipe segment is connected with the first oil pipe segment 22, one end with a smaller diameter of the first reducing pipe segment is connected with the third oil pipe segment 23, one end with a larger diameter of the second reducing pipe segment is connected with the third oil pipe segment 23, and one end with a smaller diameter of the second reducing pipe segment is connected with the second oil pipe segment 24. By adopting a connecting way of the reducing pipe segments, the first oil pipe segment 22 may be connected with the second oil pipe segment 24 on a premise of meeting the first fitting surface 221 and the second fitting surface 241 having the different outer diameters, and meanwhile, smooth transition is formed among the oil pipe segments with different diameters, which facilitates processing of the oil pipe 2.

In some examples, a stepped structure may be formed between the first oil pipe segment 22 and the second oil pipe segment 24, so that the first oil pipe segment 22 and the second oil pipe segment 24 with the different diameters are connected.

In another example, the first oil pipe segment and the second oil pipe segment may be two annular bulges arranged outside the oil pipe and with different diameters, and circumferential outer surfaces of the two annular bulges are respectively a first fitting surface and a second fitting surface, so as to fit with the first hole and the second hole respectively.

In some examples, in an example of the first hole 13 being used as an inserting hole, a length of a contact surface between the second fitting surface 241 and the second hole 14 extending in an axial direction is larger than a length of a contact surface between the first fitting surface 221 and the first hole 13 extending in an axial direction. As such, in a process of inserting the oil pipe 2 into the rotating shaft body 1 from the first hole 13, the second fitting surface 241 on the oil pipe 2 forms an interference fit with the second hole 14 first, in a process of continuously inserting the oil pipe 2, the second fitting surface 241 may keep the interference fit with the second hole 14, until the oil pipe 2 is mounted in place, thus forming a mounting state that the first fitting surface 221 is in the interference fit with the first hole 13, and the second fitting surface 241 is in the interference fit with the second hole 14.

In an example of the second hole 14 being used as the inserting hole, the length of the contact surface between the second fitting surface 241 and the second hole 14 extending in the axial direction is smaller than the length of the contact surface between the first fitting surface 221 and the first hole 13 extending in the axial direction. For example, in a process of inserting the oil pipe 2 into the rotating shaft body 1 from the second hole 14, the first fitting surface 221 on the oil pipe 2 forms an interference fit with the first hole 13 first, in a process of continuously inserting the oil pipe 2, the first fitting surface 221 may keep the interference fit with the first hole 13, until the oil pipe 2 is mounted in place, thus forming a mounting state that the first fitting surface 221 is in the interference fit with the first hole 13, and the second fitting surface 241 is in the interference fit with the second hole 14.

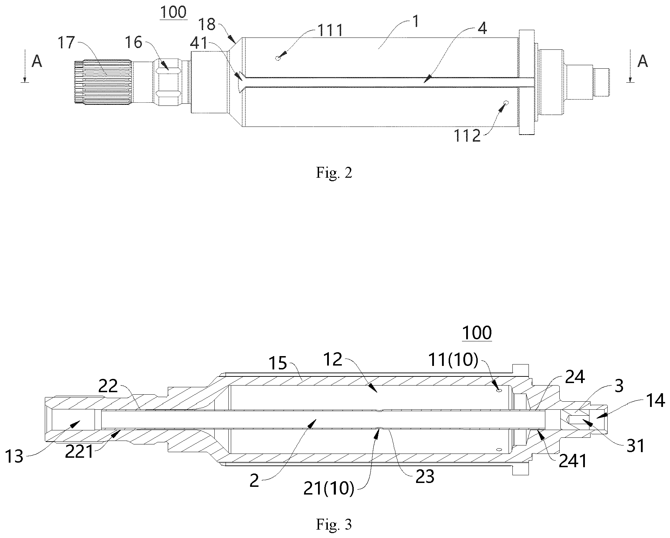

The rotating shaft body 1 may be of any appropriate structure. In an example provided by the disclosure, as shown in Fig. 3, the rotating shaft body 1 may be of an integrated structure. In the integrated structure, the first hole 13 and the second hole 14 may be formed at two ends of the rotating shaft body 1 respectively, and communicate with the cavity 12 to form a complete mounting space. The integrated structure may increase the integral structural strength of the rotating shaft body 1, so as to ensure that the motor rotating shaft 100 will not fail due to insufficient structural strength in the running process, and a service life of the motor rotating shaft 100 is prolonged.

In another example, the rotating shaft body 1 may be of a split structure. As shown in Fig. 5, the rotating shaft body 1 includes a main body portion 5 and a shaft head portion 6, the second hole 14 is formed in the shaft head portion 6, and the shaft head portion 6 is detachably connected with the main body portion 5. By adopting the split structure, the assembling and processing difficulty of the motor rotating shaft 100 may be reduced, and the production cost is reduced.

In some examples, as shown in Fig. 3, through holes 10 include first through hole 11 and second through hole 21, the first through hole 11 is formed in a wall of the rotating shaft body 1 and used for enabling the cavity 12 to communicate with an outer side of the rotating shaft body 1, and the second through hole 21 is formed in a wall of the oil pipe 2 and used for enabling an interior of the oil pipe 2 to communicate with the cavity 12. Cooling liquid in the oil pipe 2 flows from the interior of the oil pipe 2 to the outside of the rotating shaft body 1 through the first through hole 11 and the second through hole 21, so as to cool a rotor of a motor.

As shown in Fig. 3 and Fig. 5, the second through hole 21 may be formed in a portion, located in the cavity 12, of the oil pipe 2, for example, formed in the third oil pipe segment 23.

The third oil pipe segment 23 is arranged in the cavity 12, the second through hole 21 is formed in the third oil pipe segment 23, the cooling liquid flowing out of the second through hole 21 may directly enter the cavity 12, is accumulated in the cavity 12 and then flows out of the rotating shaft body 1 through the first through hole 11. For example, the cooling liquid may be limited in the cavity 12, so as to prevent the cooling liquid from flowing out of other outlets or gaps, and the cooling efficiency of the cooling liquid is improved. In addition, the cooling liquid in the cavity 12 may also cool the rotating shaft body 1 first, and then flow out through the first through hole 11 to cool other parts of the motor, which improves a use ratio of the cooling liquid.

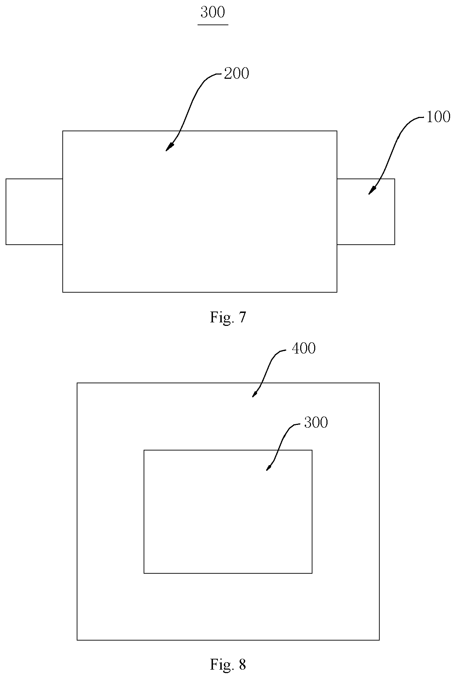

In order to improve a cooling effect of a rotor core, in some examples, as shown in Fig. 1 and Fig. 7, the plurality of first through holes 11 may be provided, and include first sub-through hole 111 and second sub-through hole 112. The rotating shaft body 1 is provided with a mounting portion 15 for mounting the rotor core 200, and the first sub-through hole 111 and the second sub-through hole 112 are formed in the mounting portion 15 at intervals in the axial direction of the rotating shaft body 1. In the axial direction of the rotating shaft body 1, the second through holes 21 are located between the first sub-through hole 111 and the second sub-through hole 112.

The cooling liquid entering the cavity 12 through the second through hole 21 may flow out of the rotating shaft body 1 through the first sub-through hole 111 and the second sub-through hole 112 communicating with the cavity 12 respectively, a flow rate of the cooling liquid may be increased, and thus the cooling effect is improved. The first sub-through hole 111 and the second sub-through hole 112 are formed in the mounting portion 15 for mounting the rotor core, so that the cooling liquid may be in direct contact with the rotor core after flowing out, temperature losses in the flowing process are reduced, and the cooling effect of the cooling liquid is improved. In addition, the second through hole 21 are formed between the first sub-through hole 111 and the second sub-through hole 112, so that the cooling liquid flowing out of the second through hole 21 may flow to the two sides to reach the first sub-through hole 111 and the second sub-through hole 112 respectively, and flowing paths of the two directions do not interfere with each other, which is conductive to increasing the flow velocity of the cooling liquid in the cavity 12.

In some examples, as shown in Fig. 3, in the axial direction of the rotating shaft body 1, a distance between the second through hole 21 and the first sub-through hole 111 is a first distance, a distance between the second through hole 21 and the second sub-through hole 112 is a second distance, and the first distance may be equal to the second distance. The second through hole 21 is formed at a midpoint position of the first sub-through hole 111 and the second sub-through hole 112, which is conductive to equally dividing the cooling liquid flowing out of the second through holes 21, so that the quantity of the cooling liquid of the first sub-through hole 111 and the second sub-through hole 112 is closer, the cooling liquid cools the rotor core more uniform, and the cooling effect is better.

In some examples, as shown in Fig. 2, the plurality of second through holes 21 may be provided, the plurality of second through holes 21 are arranged at intervals in a circumferential direction of the oil pipe 2, and in an axial direction of the oil pipe 2, the plurality of second through holes 21 are the same in position. The plurality of second through holes 21 are arranged in the circumferential direction of the oil pipe 2, when the oil pipe 2 rotates with the rotating shaft body 1, the quantity of the cooling liquid thrown out by centrifugal force through the second through holes 21 may be increased, so that the oil pipe 2 may drain more cooling liquid within unit time, and thus the cooling effect is further improved. In addition, since the plurality of second through holes 21 arranged at intervals in the circumferential direction are the same in position in the axial direction, the cooling liquid may flow out of the plurality of second through holes 21, spraying of the cooling liquid is more uniform, the cooling liquid is prevented from being accumulated at a place, and the cooling uniformity is improved.

In order to improve the flow of the cooling liquid, in some examples, as shown in Fig. 1, the plurality of first sub-through holes 111 may be provided, the plurality of first sub-through holes 111 are arranged at intervals in the circumferential direction of the rotating shaft body 1, and in the axial direction of the rotating shaft body 1, the plurality of first sub-through holes 111 are the same in position. By increasing the number of the first sub-through holes 111 formed in the rotating shaft body 1 in the circumferential direction, the quantity of the cooling liquid flowing out through the first sub-through holes 111 within unit time may be increased, and thus the cooling effect is improved.

As another example, the plurality of second sub-through holes 112 may be provided, the plurality of second sub-through holes 112 are arranged at intervals in the circumferential direction of the rotating shaft body 1, and in the axial direction of the rotating shaft body 1, the plurality of second sub-through holes 112 are the same in position. The plurality of second sub-through holes 112 may also increase the quantity of the cooling liquid, and thus the cooling effect is improved.

As yet another example, as shown in Fig. 1 and Fig. 2, the plurality of first sub-through holes 111 and the plurality of second sub-through holes 112 are all provided, the plurality of first sub-through holes 111 are arranged at intervals in the circumferential direction of the rotating shaft body 1, in the axial direction of the rotating shaft body 1, the plurality of first sub-through holes 111 are the same in position, the plurality of second sub-through holes 112 are arranged at intervals in the circumferential direction of the rotating shaft body 1, and in the axial direction of the rotating shaft body 1, the plurality of second sub-through holes 112 are the same in position. The flow of the cooling liquid is further increased, and the cooling effect is improved.

In order to seal the cavity 12, in some examples, as shown in Fig. 3, the motor rotating shaft 100 further includes a plug 3, the plug 3 is mounted at a portion in the second hole 14 away from the cavity 12, or, the plug 3 is mounted at a portion in the first hole 13 away from the cavity 12.

Since the cooling liquid flows into the oil pipe 2 from one end of the oil pipe 2 close to the first hole 13 or the second hole 14 serving as the inserting hole, flows out through the second through holes 21 formed in the oil pipe 2, and flows out of the rotating shaft body 1 through the first through holes 11, the plug 3 is arranged in the first hole 13 or the second hole 14 serving as the non-inserting hole, it may be ensured that the cooling liquid is in the rotating shaft body 1, and flows out through the first through holes 11, on the one hand, it is ensured that the cooling liquid can flow according to a designed flow path, and will not leak to cause device failure; and on the other hand, pressure of the cooling liquid in the oil pipe 2 may further be ensured, so that the cooling liquid may flow out through the second through holes 21 in the rotating process.

In some examples, as shown in Fig. 3, a threaded hole 31 is formed on one side of the plug 3 away from the cavity 12. The threaded hole 31 may be used for fitting with a hoisted threaded rod during assembling the motor, which is conductive to overhanging the motor rotating shaft 100, and thus the assembling difficulty of the motor rotating shaft 100 is reduced.

In order to facilitate assembly of the rotor core, in some examples, as shown in Fig. 1 and Fig. 7, a mounting surface 19 for mounting the rotor core 200 is formed on an outer surface of the rotating shaft body 1, a cut-through keyway 4 is formed on the mounting surface 19 in the axial direction of the rotating shaft body 1, a V-shaped opening 41 (such as a dovetail groove) is formed at one end of the keyway 4, and an opening direction of the V-shaped opening 41 faces one side away from the keyway 4. The rotor core 200 is connected with the rotating shaft body 1 through a key connection and is locked in a circumferential direction, and by arranging the cut-through keyway 4 on the mounting surface 19, the rotor core 200 may be mounted on an extending length of the keyway 4. In addition, the V-shaped opening 41 with the opening direction facing one side away from the keyway 4 is arranged at the end of the keyway 4, so that the opening of the V-shaped opening 41 may guide a mounted key, which is conductive to mounting a key fitting with the keyway 4 into the keyway 4 from the V-shaped opening 41, and the assembly convenience is improved.

In some examples, as shown in Fig. 1 and Fig. 2, a spline 17 may be formed at one end of the rotating shaft body 1, an oil-passing groove 16 may further be formed in the outer surface of the rotating shaft body 1 close to the spline 17, and the oil-passing groove 16 extends in the axial direction of the rotating shaft body 1. The spline 17 is formed at one end of the rotating shaft body 1 for being connected with a transmission mechanism, and in the rotating process of the rotating shaft, in order to reduce abrasion caused by fitting of the spline 17 with the transmission mechanism, lubricating oil will be usually added at a part where the spline 17 fits, so as to reduce the abrasion and make transmission more smooth at a premise of ensuring the transmission. By arranging the oil-passing groove 16 close to the spline 17, lubricating oil will be provided for lubricating sides of the spline 17. The oil-passing groove 16 extends in the axial direction of the rotating shaft body 1, compared with a way of the oil-passing groove 16 extending simultaneously in the circumferential direction and axial direction of the rotating shaft body 1, it may be ensured that regardless of whether the rotating shaft body 1 rotates clockwise or anticlockwise, the lubricating oil will flow in a direction close to the spline 17 or away from the spline 17 through the oil-passing groove 16, and normal flowing of the lubricating oil is ensured.

The rotating shaft body 1 may be machined in any appropriate way, in one example, as shown in Fig. 2, a closing surface 18 may further be formed on the surface of the rotating shaft body 1, since the rotating shaft body 1 is of an integrated structure, may be machined and shaped by adopting a spinning way, and the closing surface 18 may meet spinning process requirements, so as to ensure that the rotating shaft body 1 may be machined and shaped according to the design.

In other examples, the rotating shaft body 1 may further be machined and shaped by rotary swaging, but this is not limiting

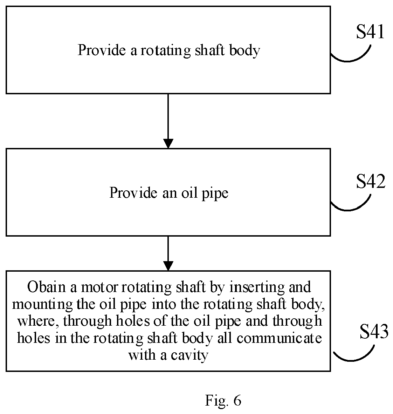

In an embodiment as shown in Fig. 6, there is provided an assembly method of a motor rotating shaft 100. The method is used for assembling the above motor rotating shaft 100 according to the first aspect of the disclose, and includes:
step S41: a rotating shaft body 1 is provided (i.e. Providing the rotating shaft body);
step S42: an oil pipe 2 is provided; and
step S43: the motor rotating shaft 100 is obtained by inserting and mounting the oil pipe 2 into the rotating shaft body 1, where, through holes (such as the second through holes 21) of the oil pipe 2 and through holes (such as the first through holes 11) in the rotating shaft body 1 all communicate with a cavity 12.

Through the above technical solution, the oil pipe 2 is inserted and mounted into the rotating shaft body 1 to complete assembly of the motor rotating shaft 100, so that cooling liquid flowing from the oil pipe 2 can enter the rotating shaft body 1, and flows out of the rotating shaft body 1, so as to form a cooling liquid flow path, and thus cooling a motor rotor is achieved.

Providing the rotating shaft body 1 (the above step S43) may include providing the rotating shaft body 1 of an integrated structure. Adopting the rotating shaft body 1 of the integrated structure does not need to assembly of a plurality of parts into the rotating shaft body 1 and then mounting the oil pipe 2, and so the assembling process of the motor rotating shaft 100 is simplified, and the production efficiency of the motor rotating shaft 100 is improved.

Providing the rotating shaft body 1 (the above step S43) may further include providing the rotating shaft body 1 of a split structure, the rotating shaft body 1 of the split structure includes a main body portion 5 and a shaft head portion 6, before assembling the motor rotating shaft 100, the rotating shaft body 1 of the split structure may connect the shaft head portion 6 with the main body portion 5 first to obtain the rotating shaft body 1. The rotating shaft body 1 of the split structure is convenient to disassemble, assembly and overhaul, and the production cost may be reduced.

In some examples, the above step S43 includes:
In an example of a first hole 13 serving as an inserting hole, the oil pipe 2 may be inserted from the first hole 13, until the oil pipe 2 reaches a mounting position where a second fitting surface 241 is in an interference fit with a second hole 14, and a first fitting surface 221 is in an interference fit with the first hole 13.

In an example of the second hole 14 serving as the inserting hole, the oil pipe 2 may be inserted from the second hole 14, until the oil pipe 2 reaches a mounting position where the first fitting surface 221 is in an interference fit with a first hole 13, and the second fitting surface 241 is in an interference fit with the second hole 14.

By adopting a connection way of an interference fit, the first fitting surface 221 and the second fitting surface 241 of the oil pipe 2 are connected and fit with the first hole 13 and the second hole 14 of the rotating shaft body 1 respectively, a connecting structure of the oil pipe 2 and the rotating shaft body 1 may be simplified, by adopting the own connection of the oil pipe 2 and the rotating shaft body 1, a fastener for connecting the oil pipe 2 and the rotating shaft body 1 may be omitted. For example, the structure and assembling process may be simplified, and thus the mounting efficiency is improved.

In addition, in a process of inserting the oil pipe 2 into the rotating shaft body 1 from either of the first hole 13 and the second hole 14, the oil pipe 2 may form an interference fit with the one used as a non-inserting hole in the first hole 13 and the second hole 14 first, and then form an interference fit with the other one used as an inserting hole in the first hole 13 and the second hole 14.

Since the first fitting surface 221 is in an interference fit with an inner wall of the first hole 13, the second fitting surface 241 is in an interference fit with an inner wall of the second hole 14, in the mounting process, if the first fitting surface 221 and the second fitting surface 241 are simultaneously in an interference fit with the inner wall of the first hole 13 and the inner wall of the second hole 14 respectively, a frictional force of the oil pipe 2 being inserted into the rotating shaft body 1 will be increased, which increases the mounting difficulty.

In the example of the first hole 13 serving as the inserting hole, in the process of inserting the oil pipe 2 from the first hole 13, the second fitting surface 241 forms the interference fit with the inner wall of the second hole 14 first, and then first fitting surface 221 forms the interference fit with the inner wall of the first hole 13, in the mounting process, a frictional resistance of the first fitting surface 221 and the second fitting surface 241 for the interference fit in sequence is less than a frictional resistance of the first fitting surface 221 and the second fitting surface 241 for the interference fit simultaneously, which is conductive to mounting of the oil pipe 2.

In some examples, the motor rotating shaft 100 further includes a plug 3. The assembly method of the motor rotating shaft 100 may further include:
inserting the plug 3 into the first hole 13 or the second hole 14 in a direction close to the cavity 12.

Since in an example provided by the disclosure, the first hole 13 or the second hole 14 enables the cavity 12 to communicate with the outside, one end of the oil pipe 2 is also located in the first hole 13 or the second hole 14, in order to ensure sealing of the cavity 12 and the first hole 13 or the second hole 14, the plug 3 is inserted from the first hole 13 or the second hole 14, so as to seal the oil pipe 2 and the cavity 12.

In some examples, referring to Fig. 3, the second hole 14 enables the cavity 12 to communicate with the outside, one end of the oil pipe 2 is also located in the second hole 14, and in order to ensure sealing of the cavity 12 and the second hole 14, the plug 3 is inserted from the second hole 14, so as to seal the oil pipe 2 and the cavity 12.

It may be understood that in other examples of the disclosure, one of the first hole 13 and the second hole 14 may also be a blind hole. For example, the motor rotating shaft 100 may not need to mount the plug 3, and the assembly efficiency of the motor rotating shaft 100 is further improved.

An integral assembly process of the motor rotating shaft 100 may be:
providing a rotating shaft body 1;
providing an oil pipe 2; and
inserting the oil pipe 2 from one of the first hole 13 and the second hole 14 serving as an inserting hole, until a first fitting surface 221 is at a preset position in the first hole 13 in an interference fit mode, and a second fitting surface 241 is at a preset position in the second hole 14 in an interference fit mode.

Then, the plug 3 is inserted into the one of the first hole 13 and the second hole 14 serving as a non-inserting hole in a direction close to the cavity 12, so as to complete assembly of the motor rotating shaft 100.

It is worth noting that the above method examples are expressed as a series of combinations of actions for the purpose of simple description, but those skilled in the art will be aware that the invention is not limited by the sequence of actions described.

Secondly, those skilled in the art will also be aware that examples described in the description all belong to preferred examples, and the involved actions are not necessarily needed by the invention.

As a third aspect of the invention, an embodiment of which is shown in Fig. 7, there is provided a motor 300, including the above motor rotating shaft 100.

As a fourth aspect of the invention, an embodiment of which is shown in Fig. 8, there is provided a vehicle 400, including the above motor 300.

The preferred implementations of the invention are described in detail above in conjunction with the accompanying drawings, however, the invention is not limited to specific details in the above implementations, and various simple modifications may be performed with the scope of protection of the invention as defined by the claims.

In addition, it needs to be noted that the specific technical features described in the above specific implementations may be combined through any appropriate way within the scope of the invention.

In addition, any combination of different implementations of the invention may also be made within the scope of the claims.

## Claims

1. A motor rotating shaft, comprising:
a rotating shaft body (1), having a cavity (12), a first hole (13) and a second hole (14), wherein the first hole (13) and the second hole (14) are both in communication with the cavity (12); and
an oil pipe (2), inside the rotating shaft body (1), the oil pipe (2) and the rotating shaft body (1) both having through holes (10) for leading cooling liquid in the oil pipe (2) out of the rotating shaft body (1);
wherein, in a process of inserting the oil pipe (2) into the rotating shaft body (1) from either of the first hole (13) and the second hole (14), the oil pipe (2) is configured to form an interference fit with the one used as a non-inserting hole in the first hole (13) and the second hole first (14), and then to form an interference fit with the other one used as an inserting hole in the first hole (13) and the second hole (14).

2. The motor rotating shaft according to claim 1, wherein, the oil pipe (2) has a first fitting surface (221) and a second fitting surface (241);
the first fitting surface (221) is used for being in an interference fit with the first hole (13), and the second fitting surface (241) is used for being in an interference fit with the second hole (14);
the first hole (13) is used as the inserting hole, an outer diameter of the second fitting surface (241) is smaller than an outer diameter of the first fitting surface (221); or
the second hole (14) is used as the inserting hole, the outer diameter of the second fitting surface (241) is larger than the outer diameter of the first fitting surface (221).

3. The motor rotating shaft according to claim 2, wherein, the oil pipe (2) has a first oil pipe
segment (22) and a second oil pipe segment (24) with unequal diameters in an axial direction, and
the first fitting surface (221) is a circumferential outer surface of the first oil pipe segment (22), and the second fitting surface (241) is a circumferential outer surface of the second oil pipe segment (24).

4. The motor rotating shaft according to claim 3, wherein, the first hole (13) is used as the inserting hole, a length of a contact surface between the second fitting surface (241) and the second hole (14) extending in the axial direction is larger than a length of a contact surface between the first fitting surface (221) and the first hole (13) extending in the axial direction; or
the second hole (14) is used as the inserting hole, the length of the contact surface between the second fitting surface (241) and the second hole (14) extending in the axial direction is smaller than the length of the contact surface between the first fitting surface (221) and the first hole (13) extending in the axial direction.

5. The motor rotating shaft according to any one of claims 1 to 4, wherein, the rotating shaft body (1) is of an integrated structure.

6. The motor rotating shaft according to any one of claims 1 to 4, wherein, the rotating shaft body (1) comprises a main body portion (5) and a shaft head portion (6), the second hole (14) is in the shaft head portion (6), and the shaft head portion (6) is detachably connected with the main body portion (5).

7. The motor rotating shaft according to any one of claims 1 to 6, wherein, the through holes (10) comprise a first through hole (11) and a second through hole (21);
the first through hole (11) is in a wall of the rotating shaft body (1) for enabling the cavity (12) to communicate with an outside of the rotating shaft body (1); and
the second through hole (12) is in a wall of the oil pipe (2) for enabling an interior of the oil pipe (2) to communicate with the cavity (21).

8. The motor rotating shaft according to claim 7, wherein, the plurality of first through holes (10) are provided and comprise a first sub-through hole (111) and a second sub-through hole (112);
the rotating shaft body (1) is provided with a mounting portion (15) for mounting a rotor core (200), and the first sub-through hole (111) and the second sub-through hole (112) are formed in the mounting portion (15) at intervals in an axial direction of the rotating shaft body (1); and
in the axial direction of the rotating shaft body (1), the second through hole (21) is between the first sub-through hole (111) and the second sub-through hole (112).

9. The motor rotating shaft according to claim 8, wherein, in the axial direction of the rotating shaft body (1), a distance between the second through hole (21) and the first sub-through hole (111) is a first distance, a distance between the second through hole (21) and the second sub-through hole (112) is a second distance, and the first distance is equal to the second distance;
optionally, wherein, the plurality of second through holes (21)are provided, the plurality of second through holes (21) are arranged at intervals in a circumferential direction of the oil pipe (2), and in an axial direction of the oil pipe (2), the plurality of second through holes (21) are the same in position.

10. The motor rotating shaft according to claim 8 or 9, wherein, the plurality of first sub-through holes (111) are provided, the plurality of first sub-through holes (111) are arranged at intervals in a circumferential direction of the rotating shaft body (1), and in the axial direction of the rotating shaft body (1), the plurality of first sub-through holes (111) are the same in position; and/or
the plurality of second sub-through holes (112) are provided, the plurality of second sub-through holes (112) are arranged at intervals in a circumferential direction of the rotating shaft body (1), and in the axial direction of the rotating shaft body (1), the plurality of second sub-through holes (112) are the same in position.

11. The motor rotating shaft according to any one of claims 1 to 10, further comprising a plug (3),
wherein the plug (3) is at a part of an interior of the second hole (14) away from the cavity (12), or, the plug (3) is at a part of an interior of the first hole (13) away from the cavity (12);
optionally, wherein, a threaded hole (31) is on a side of the plug (3) away from the cavity (12).

12. The motor rotating shaft according to any one of claims 1 to 11, wherein, a mounting surface (9) for mounting a rotor core (200) is on an outer surface of the rotating shaft body (1);
a cut-through keyway (4) is on the mounting surface (9) in an axial direction of the rotating shaft body (1); and
a V-shaped opening (41) is at one end of the keyway (4), and an opening direction of the V-shaped opening (41) faces a side away from the keyway (4).

13. An assembly method of a motor rotating shaft, applied to the motor rotating shaft (100) according to any one of claims 1 to 12, and comprising:
providing (S41) the rotating shaft body (1);
providing (S42) the oil pipe (2); and
obtaining (S43) the motor rotating shaft (100) by inserting and mounting the oil pipe (2) into the rotating shaft body (1), wherein, through hole (10) of the oil pipe (2) and through hole (10) in the rotating shaft body (1) all communicate with the cavity (12).
optionally, wherein, the motor rotating shaft (100) further comprises a plug (3), and the method further comprises:
inserting the plug into the first hole (13) or the second hole (14) in a direction close to the cavity (12).

14. A motor, comprising the motor rotating shaft (100) according to any one of claims 1 to 12.

15. A vehicle, comprising the motor (300) according to claim 14.
